# EUROPEAN PATENT APPLICATION

(11) **EP 4 761 417 A1**
(43) Date of publication of application: **17.06.2026**
(21) Application number: 23948056.9
(22) Date of filing: 10.08.2023
(51) Int. Cl.: H04W 72/12

(54) **DATA RECEIVING METHOD AND APPARATUS, AND DATA SENDING METHOD AND APPARATUS**

(71) Applicant: 1FINITY Inc., Kawasaki-shi, Kanagawa 211-8588 (JP)
(72) Inventor: ZHANG, Jian, Beijing 100022 (CN); JIA, Meiyi, Beijing 100022 (CN); SUN, Gang, Beijing 100022 (CN)
(74) Representative: Haseltine Lake Kempner LLP
(86) International application number: PCT/CN2023/112236
(87) International publication number: WO 2025/030481

(57) **Abstract**

Embodiments of this disclosure provide data reception and data transmission methods and apparatuses thereof. The method includes: receiving first indication information by a terminal equipment; and after the first indication information is received and before a first time point, transmitting uplink data to a target cell by using a first configured grant occasion of a first configured grant. Hence, the target cell may quickly obtain information of the uplink beam and/or the downlink beam after handover, thereby reducing interruption times, and the terminal equipment may use resources of the configured grant more efficiently, thereby improving a successful rate of uplink transmission and resource utilization rate.

## Description

### Technical Field

This disclosure relates to the field of communication technologies.

### Background

Layer 1/layer 2 triggered mobility (LTM) has been studied by the 3GPP standard organization in Release 18 (Rel-18). For the Rel-18 LTM, the goal is to reduce the time needed in hand over interruption via cell switch based on layer 1/layer 2 signaling, thereby enabling faster switch from a serving cell (source cell) to a target cell.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Layer 1/layer 2 triggered mobility (LTM) has been studied in Rel-18. For the Rel-18 LTM, the goal is to reduce the time needed in hand over interruption via cell switch based on layer 1/layer 2 signaling, thereby enabling faster switch from a serving cell (source cell) to a target cell. The target cell is a cell after switch, which may be a serving cell, or may be a non-serving cell. The hand over interruption refers to a time from the terminal equipment receives a cell switch command to the time when the terminal equipment successfully performing uplink or downlink transmission for the first time with the target cell. Compared to legacy cell switch based on layer 3 signaling, cell switch based on layer 1/layer 2 signaling is able to further reduce handover interruption. To achieve cell switch based on layer 1/layer 2 signaling, a terminal equipment measures multiple candidate cells, such as measuring layer 1 reference signal receiving power (L1-RSRP) of a system synchronization block (SSB), and reports measurement results to a source cell, such as transmitting a channel state information (CSI) report, and the source cell indicates to the terminal equipment via a cell switch command which candidate cell to switch (the indicated candidate cell becomes a target cell), and indicates beams used for uplink and downlink transmission on the target cell after the switch, which is, for example, a transmission configuration indication (TCI) state, wherein all of the source cell, candidate cell and target cell in Rel-18 LTM support the unified TCI state in Rel-17. Therefore, the TCI state indicated above is a unified TCI state.

In addition, in Rel-18 LTM, candidate cell configuration, measurement configuration and reporting configuration (CSI reporting configuration) are provided by the source cell to the terminal equipment before the cell switch command. The candidate cell configuration includes a radio resource control (RRC) configuration applied by the terminal equipment after being switched to the target cell, i.e. an RRC configuration of the target cell. The terminal equipment may immediately apply the RRC configuration of the target cell after the cell switch, thereby quickly completing successful uplink or downlink transmission with the target cell. The measurement configuration mainly includes a configuration of measurement reference signals (such as SSBs), and the CSI reporting configuration is used to configure information needed in reporting. For a specific RRC signaling structure, for example, the CSI reporting configuration is included in a serving cell configuration, while the measurement configuration is contained outside of the serving cell configuration and a candidate cell configuration.

For a legacy configured grant, such as a configured grant before introduction of Rel-18 LTM, a terminal equipment may transmit uplink data by using the configured grant (CG). In a configuration of the configured grant, the terminal equipment is preconfigured with configured grant occasions, which are always reserved for possible uplink transmissions. When there is uplink data needing to be transmitted, the terminal equipment may autonomously select a configured grant occasion for transmission. As there is no need to wait for uplink scheduling from a network device, the configured grant may achieve faster uplink transmissions. The configured grant includes configured grant type 1 and configured grant type 2. After radio resource control (RRC) signaling configures configured grant type 1, the terminal equipment may perform uplink transmissions by using the configured grant occasion. After radio resource control (RRC) signaling configures configured grant type 2, the terminal equipment may perform uplink transmissions by using the configured grant occasion only after downlink control information (DCI) activation.

It was found by the inventors that in Rel-18 LTM, after the terminal equipment is switched to a target cell, it may possibly use a first configured grant with configured grant occasions associated with beams (such as a configured grant related to Rel-18 LTM), or a second configured grant with configured grant occasions not associated with beams (such as a legacy configured grant). Wherein, how the target cell learns about downlink beams used by the terminal equipment in the target cell, how the terminal equipment uses the first configured grant and a legacy configured grant and how the first configured grant and the legacy configured grant are configured for the terminal equipment are problems that need to be solved.

In order to solve at least one of the above problems, embodiments of this disclosure provide data reception and data transmission methods and apparatuses thereof. Hence, the target cell may quickly obtain information of uplink beams and/or downlink beams after switch, thereby reducing interruption times, and the terminal equipment may use resources of the configured grant more efficiently, thereby improving a successful rate of uplink transmission and resource utilization rate.

According to one aspect of the embodiments of this disclosure, there is provided a data reception method, applicable to a terminal equipment, the method including:
receiving first indication information; and after the first indication information is received and before a first time point, transmitting uplink data to a target cell by using a first configured grant occasion of a first configured grant.

According to another aspect of the embodiments of this disclosure, there is provided a data transmission method, applicable to a network device, the method including:
transmitting first indication information to a terminal equipment, wherein the terminal equipment transmits uplink data to a target cell by using a first configured grant occasion of a first configured grant after receiving the first indication information and before a first time point.

According to a further aspect of the embodiments of this disclosure, there is provided a data reception apparatus, configured in a terminal equipment, wherein the data reception apparatus includes: a first receiving unit configured to receive first indication information; and a first transmitting unit configured to, after the first indication information is received and before a first time point, transmit uplink data to a target cell by using a first configured grant occasion of a first configured grant.

According to still another aspect of the embodiments of this disclosure, there is provided a data transmission apparatus, configured in a network device, the data reception apparatus including: a second transmitting unit configured to transmit first indication information to a terminal equipment, wherein the terminal equipment transmits uplink data to a target cell by using a first configured grant occasion of a first configured grant after receiving the first indication information and before a first time point.

According to yet another aspect of the embodiments of this disclosure, there is provided a communication system, including:
a network device configured to transmit first indication information; and
a terminal equipment configured to receive the first indication information, and after the first indication information is received and before a first time point, transmit uplink data to a target cell by using a first configured grant occasion of a first configured grant.

An advantage of the embodiments of this disclosure exists in that the terminal equipment receives the first indication information, and after the first indication information is received and before a first time point, transmits uplink data to a target cell by using a first configured grant occasion of a first configured grant. Hence, the target cell may quickly obtain information of uplink beams and/or downlink beams after switch, thereby reducing interruption times, and the terminal equipment may use resources of the configured grant more efficiently, thereby improving a successful rate of uplink transmission and resource utilization rate.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/including/includes" when used in this specification is taken to specify the presence of stated features, integers, steps or components but does not preclude the presence or addition of one or more other features, integers, steps, components or groups thereof.

### Brief Description

Elements and features depicted in one drawing or embodiments of the invention may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of a communication system of the embodiments of this disclosure;
FIG. 2 is a schematic diagram of cell switch of Rel-18 LTM of the embodiments of this disclosure;
FIG. 3 is a schematic diagram of a data reception method of the embodiments of this disclosure;
FIG. 4 is an exemplary diagram of transmitting uplink data of the embodiments of this disclosure;
FIG. 5 is an exemplary diagram of determining a first configured grant of the embodiments of this disclosure;
FIG. 6 is another exemplary diagram of determining a first configured grant of the embodiments of this disclosure;
FIG. 7 is a further exemplary diagram of determining a first configured grant of the embodiments of this disclosure;
FIG. 8 is another exemplary diagram of transmitting uplink data of the embodiments of this disclosure;
FIG. 9 is a further exemplary diagram of transmitting uplink data of the embodiments of this disclosure;
FIG. 10 is still another exemplary diagram of transmitting uplink data of the embodiments of this disclosure;
FIG. 11 is yet another exemplary diagram of transmitting uplink data of the embodiments of this disclosure;
FIG. 12 is a schematic diagram of a data transmission method of the embodiments of this disclosure;
FIG. 13 is a schematic diagram of a data reception apparatus of the embodiments of this disclosure;
FIG. 14 is a schematic diagram of a data transmission apparatus of the embodiments of this disclosure;
FIG. 15 is a schematic diagram of a structure of a network device of the embodiments of this disclosure; and
FIG. 16 is a schematic diagram of a terminal equipment of the embodiments of this disclosure.

### Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term"base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

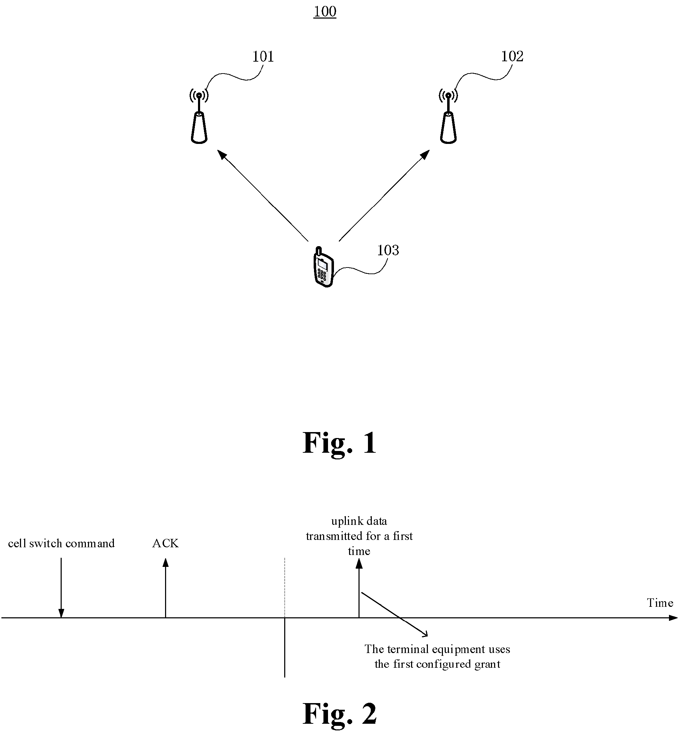

FIG. 1 is a schematic diagram of a communication system of the embodiments of this disclosure, in which a case where a terminal equipment and network devices are taken as examples is schematically shown. As shown in FIG. 1, the communication system 100 may include a first network device 101, a second network device 102 and a terminal equipment 103. For the sake of simplicity, an example having only two network devices and one terminal equipment is schematically given in FIG. 1. However, the embodiments of this disclosure are not limited thereto.

For example, the first network device 101 is a serving cell (source cell) of the terminal equipment 103, and the second network device 102 is a cell after the terminal equipment 103 is switched (target cell).

FIG. 2 is a schematic diagram of cell switch of Rel-18 LTM of the embodiments of this disclosure. As shown in FIG. 2, after receiving the cell switch command, a terminal equipment may initiate uplink data transmitted for a first time to a target cell by using a first configured grant, wherein there exists an association between configured grant occasions of the first configured grant and uplink beams. For the uplink data transmitted for the first time to the target cell, the terminal equipment needs to use a configured grant occasion associated with an uplink beam indicated by the cell switch command to perform transmission, and the target cell uses the beam associated with the configured grant occasion to receive, so that the target cell may learn about an uplink beam used by the terminal equipment in the target cell. Therefore, even in inter-DU (distribute unit) switch, there is no need for the source cell to notify the target cell of the uplink beam, thereby reducing interruption times.

In Rel-18 LTM, after the terminal equipment is switched to the target cell, it may possibly use a first configured grant with configured grant occasions associated with beams (such as a configured grant related to Rel-18 LTM) to transmit uplink data to the target cell, or may possibly use a second configured grant with configured grant occasions not associated with beams (such as a legacy configured grant) to transmit uplink data to the target cell.

It was found by the inventors that for the first configured grant, only its configured grant occasion associated with a specific beam may be used for uplink transmission. Compared to a legacy configured grant with configured grant occasions that may all be used for uplink transmission, the first configured grant is not ideal in terms of resource utilization. Therefore, if the terminal equipment continues to use the first configured grant after the switch is completed, it will cause resource waste compared to using the legacy configured grant. And the target cell not only needs to learn about the uplink beams used by the terminal equipment in transmitting data, but also needs to learn about downlink beams used by the terminal equipment in receiving data.

Therefore, how the terminal equipment uses the first configured grant and a legacy configured grant, how the first configured grant and the legacy configured grant are configured for the terminal equipment and how the target cell learns about downlink beams used by the terminal equipment in the target cell are problems that need to be solved.

In order to solve at least one of the above problems, embodiments of this disclosure provide data reception and data transmission methods and apparatuses thereof.

### Embodiments of a first aspect

The embodiments of this disclosure provide a data reception method, applicable to a terminal equipment side.

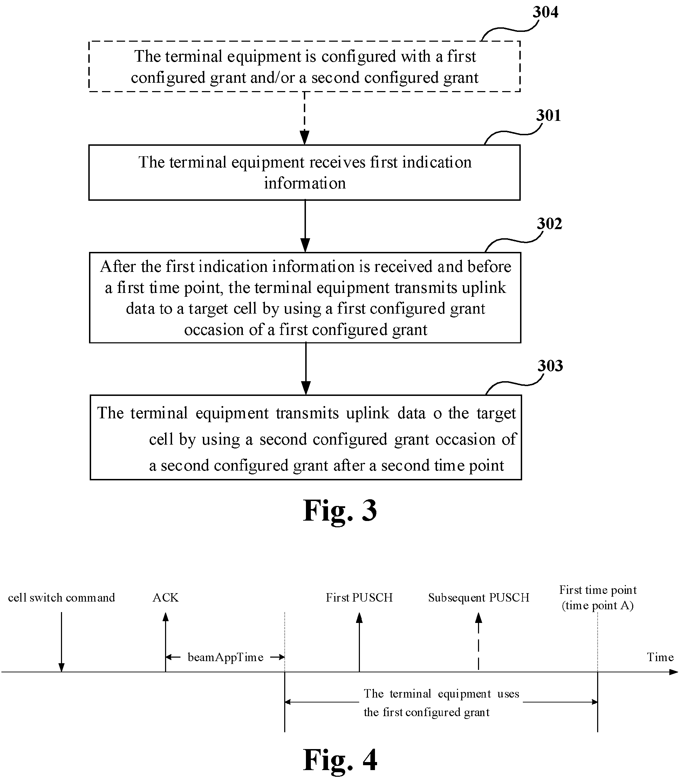

FIG. 3 is a schematic diagram of the data reception method of the embodiments of this disclosure. As shown in FIG. 3, the method includes:
301: the terminal equipment receives first indication information; and
302: after the first indication information is received and before a first time point, the terminal equipment transmits uplink data to a target cell by using a first configured grant occasion of a first configured grant.

The terminal equipment receives the first indication information, and after the first indication information is received and before the first time point, transmits uplink data to the target cell by using the first configured grant occasion of the first configured grant. Hence, the target cell may quickly obtain information of uplink beams and/or downlink beams after switch, thereby reducing interruption times, and the terminal equipment may use resources of the configured grant more efficiently, thereby improving a successful rate of uplink transmission and resource utilization rate.

It should be noted that FIG. 3 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced. Furthermore, objects of the above operations may be adjusted. And appropriate variants may be made by those skilled in the art according to the above contents, without being limited to what is contained in FIG. 3.

In some embodiments, for example, terms 'transmission configuration indication (TCI) state' and 'beam' may be used interchangeably; 'cell' may be equivalently replaced with 'carrier' or 'component carrier'; "TCI state pool" may be equivalently replaced with "TCI state set" or "TCI state list"; and 'uplink data' may be equivalently replaced with 'PUSCH (physical uplink shared channel)' or 'UL-SCH (uplink shared channel)'. The above are exemplary explanations only, and the embodiments of this disclosure are not limited thereto.

In some embodiments, the first indication information at least includes a cell switch command.

For example, before receiving the cell switch command, the terminal equipment is configured with one or more candidate cells and is provided with configuration information related to the candidate cells; and subsequently, the cell switch command indicates the terminal equipment to switch to one or more of the candidate cells (i.e. a target cell).

In some embodiments, a cell to which the terminal equipment belongs before the cell switch is referred to as "a serving cell" or "a source cell", and a cell to which the terminal equipment belongs after the cell switch is referred to as a target cell. For example, the "serving cell" transmits the cell switch command to the terminal equipment, for example, the cell switch command is carried by a media access control control element (MAC CE). Thus, cell switch is indicated by layer 1 or layer 2 signaling, hence, the terminal equipment may perform cell switch quickly. For example, reference may be made to the related art for an MAC CE format to which the cell switch command corresponds, which is not limited in this disclosure.

In some embodiments, the configured grant occasions of the first configured grant are associated with uplink beams and/or downlink beams, and the configured grant occasions of the first configured grant include the first configured grant occasion.

For example, the first configured grant occasion is a subset or complete set of configured grant occasions of the first configured grant.

In some embodiments, the uplink beam associated with the first configured grant occasion is identical to the uplink beam applied on the first configured grant occasion, and/or the downlink beam associated with the first configured grant occasion is identical to the downlink beam applied on the first configured grant occasion.

In some embodiments, one configured grant occasion of the first configured grant is associated with multiple uplink beams and/or multiple downlink beams; and in some embodiments, multiple configured grant occasions of the first configured grant are associated with one uplink beam and/or one downlink beam; however, it is not limited in this disclosure.

In some embodiments, the uplink beam applied on the first configured grant occasion and/or the downlink beam applied on the first configured grant occasion are indicated by the first indication information or the second indication information or the third indication information, wherein the first indication information at least includes a cell switch command, and the second indication information at least includes DCI, and the third indication information at least includes an MAC CE.

For example, the first indication information at least includes a cell switch command, and the uplink beam applied on the first configured grant occasion and/or the downlink beam applied on the first configured grant occasion by the terminal equipment on the first configured grant occasion is/are TCI state(s) indicated in the cell switch command. For example, the second indication information at least includes DCI, wherein a field in the DCI contains an indication of the TCI states, and the uplink beam applied on the first configured grant occasion and/or the downlink beam applied on the first configured grant occasion by the terminal equipment are TCI states of the terminal equipment indicated by the DCI after the cell switch command that different from previous TCI states. For example, the third indication information at least includes an MAC CE, wherein the MAC CE is a unified TCI state activation MAC CE, and the uplink beam applied on the first configured grant occasion and/or the downlink beam applied on the first configured grant occasion by the terminal equipment is a TCI state of the terminal equipment indicated by the unified TCI state activation MAC CE after the cell switch command that different from previous TCI states.

In some embodiments, the uplink beam includes at least one of the following: a joint TCI state, an uplink TCI state, or a TCI state, and the downlink beam includes at least one of the following: a joint TCI state, a downlink TCI state, or a TCI state.

For example, the target cell supports unified TCI, and when unifiedTCI-StateType of the target cell is configured as being joint, the unified TCI state is a joint TCI state, and the uplink beam and the downlink beam may be equivalently replaced with the joint TCI state. When unifiedTCI-StateType of the target cell is configured as being separate, the unified TCI state is a separate TCI state, the uplink beam may be equivalently replaced with uplink TCI state, and the downlink beam may be equivalently replaced with downlink TCI state.

For example, for the sake of simplicity, the joint TCI state, uplink TCI state and downlink TCI state may be collectively referred to as a TCI state, hence, the "applied uplink beam" or "applied downlink beam" i.e. are "applied TCI state". The terminal equipment may determine an applied TCI state according to the related art. For example, the terminal equipment receives the cell switch command, and may start applying a TCI state indicated by the cell switch command after a certain beam application time starting from a last symbol of ACK. For example, the terminal equipment is indicated by the DCI with a TCI state different from previous ones after the cell switch command, and may start applying the newly-indicated different TCI state after a certain beam application time after the ACK. For example, the terminal equipment is indicated by the unified TCI state activation MAC CE with a TCI state different from before previous ones after the cell switch command, and after a period of time (such as 3 milliseconds) after the ACK, the terminal equipment may start applying the newly-indicated different TCI state.

Therefore, for a configured grant occasion of the first configured grant, the terminal equipment may determine a TCI state applied during a time period where the configured grant occasion is located.

A detailed signaling process of step 302 shall be described below, and subsequently, method for determining "the first time point" shall be described in detail in this disclosure, which shall not be repeated herein any further.

FIG. 4 is an exemplary diagram of transmitting uplink data to the target cell of the embodiments of this disclosure. For example, as shown in FIG. 4, after receiving the first indication information (cell switch command) carried by the MAC CE, the terminal equipment transmits ACK to a PDSCH carrying the MAC CE, and may start transmitting uplink data to the target cell after a certain beam application time (beamAppTime) starting from a last symbol of the ACK. For example, the uplink data are physical uplink shared channels (PUSCHs), and before the first time point (time point A), the terminal equipment may only use the first configured grant to transmit PUSCH to the target cell, wherein there is an association relationship (mapping relationship) between the configured grant occasions of the first configured grant and the beams. Before the first time point, the terminal equipment uses the first configured grant to transmit PUSCH to the target cell at least once, that is, the "subsequent PUSCH" in FIG. 4 may or may not exist. 'Transmitting by using the first configured grant' refers to 'transmitting on the first configured grant occasion of the first configured grant associated with specific beam(s)'. For example, the specific beam(s) is uplink beam(s) and/or downlink beam(s) applied on the first configured grant occasion.

For example, the cell switch command indicates a beam, hence, the beam applied by the terminal equipment is the beam indicated by the cell switch command. For example, after the cell switch command, the second indication information (DCI) or the third indication information (MAC CE) indicates a new beam, and the beam applied by the terminal equipment is the beam indicated by the DCI or the MAC CE.

Thus, the terminal equipment is able to determine a beam applied at any time (including a time where the configured grant occasion of the first configured grant locates).

In some embodiments, the terminal equipment may determine the beam with which the configured grant occasion is associated according to the association between the configured grant occasion and the beam. For example, "the association between configured grant occasion and the beam" shall be described in detail later in this disclosure. For example, "the association between configured grant occasion and the beam" is determined according to Table 1, and shall not be repeated herein any further.

Thus, according to the association between the configured grant occasion and the beam, the terminal equipment may determine the beam associated with the configured grant occasion.

After the terminal equipment determines "the applied beam" and "the associated beam", it further needs to determine which configured grant occasions may be used to transmit uplink data to the target cell, which shall be described below in detail.

In some embodiments, before the first time point, the terminal equipment determines according to a first preconfigured condition whether it may use the configured grant occasion to transmit uplink data to the target cell.

For example, before the first time point, for a configured grant occasion, if a beam with which the configured grant occasion is associated and a beam applied in the configured grant occasion satisfy the first preconfigured condition, the terminal equipment may use the configured grant occasion to transmit PUSCH to the target cell; otherwise, the terminal equipment may not use the configured grant occasion to transmit PUSCH to the target cell.

"The first preconfigured condition" shall be exemplified below.

For example, in a case where an uplink beam with which the configured grant occasion is associated is identical to the uplink beam applied by the terminal equipment, the terminal equipment deems that the configured grant occasion is a valid configured grant occasion (first configured grant occasion).

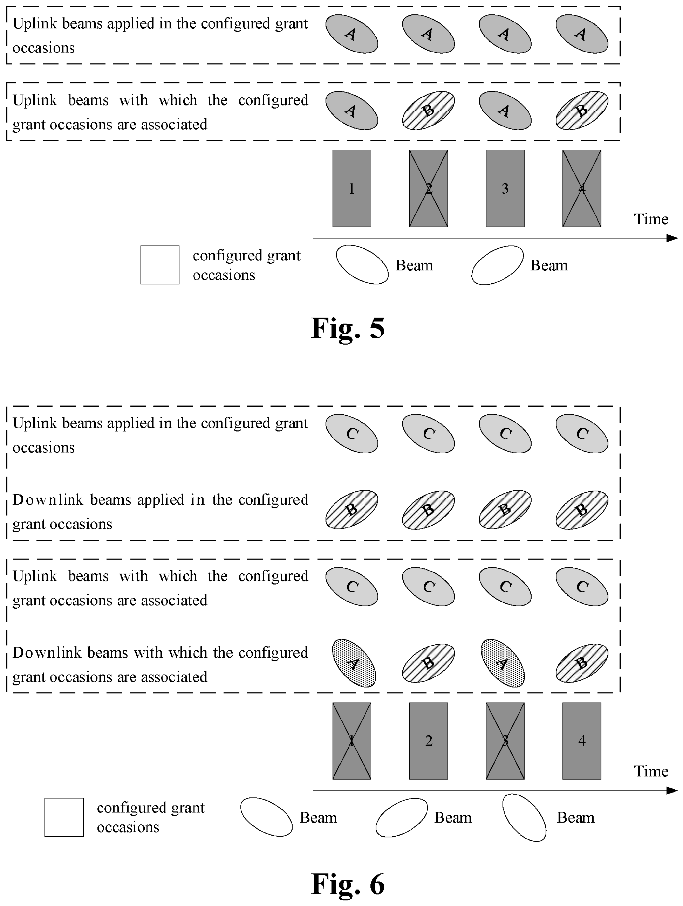

FIG. 5 is an exemplary diagram of determining the first configured grant of the embodiments of this disclosure. As shown in FIG. 5, for the first configured grant, each configured grant occasion is associated with an uplink beam (first uplink beam). The terminal equipment determines an uplink beam (second uplink beam) to be applied in each configured grant occasion, and if the first uplink beam is identical to the second uplink beam, the terminal equipment may use the configured grant occasion (first configured grant occasion) to transmit PUSCH to the target cell; otherwise, it may not use the configured grant occasion to transmit PUSCH to the target cell. For example, the terminal equipment may only use configured grant occasions 1 and 3 in FIG. 5 to transmit PUSCH, but it may not use configured grant occasions 2 and 4 to transmit PUSCH. The terminal equipment deems that configured grant occasions 1 and 3 are valid configured grant occasions, and uplink transmissions may only be performed at the valid configured grant occasions. In other words, the terminal equipment deems that the first configured grant includes only configured grant occasions 1 and 3.

For example, the "uplink beam" in FIG. 5 is replacing with "a joint TCI state", and FIG. 5 may be taken as an example of a joint TCI state, wherein what is associated with the configured grant occasion is a joint TCI state, and what is applied in the configured grant occasion is a joint TCI state.

For example, in a case where the uplink beam and downlink beam associated with the configured grant occasion are identical to the uplink beam and downlink beam applied by the terminal equipment, the terminal equipment deems that the configured grant occasion is a valid configured grant occasion (first configured grant occasion).

FIG. 6 is another exemplary diagram of determining the first configured grant of the embodiments of this disclosure. As shown in FIG. 6, for the first configured grant, each configured grant occasion is associated with a pair of beams, i.e. it is associated with an uplink beam (third uplink beam) and a downlink beam (third downlink beam). In addition, the terminal equipment determines an uplink beam (fourth uplink beam) and a downlink beam (fourth downlink beam) applied in each configured grant occasion. If the third uplink beam is identical to the fourth uplink beam and the third downlink beam is identical to the fourth downlink beam, the terminal equipment may use the configured grant occasion (first configured grant occasion) to transmit PUSCH to the target cell; otherwise, it may not use the configured grant occasion to transmit PUSCH to the target cell. Therefore, the terminal equipment may only use configured grant occasions 2 and 4 in FIG. 6 to transmit PUSCH, and may not use configured grant occasions 1 and 3 to transmit PUSCH. As each configured grant occasion is associated with an uplink beam and a downlink beam, if the target cell successfully receives PUSCH on a certain configured grant occasion, it may learn about the uplink beam and downlink beam with which the configured grant occasion is associated, that is, it may learn about the uplink beam and downlink beam applied by the terminal equipment in the target cell.

For example, in a case where the configured grant occasions are associated with uplink beams and downlink beams and the terminal equipment applies an uplink beam and a downlink beam, if the uplink beam associated with a configured grant occasion is identical to the uplink beam applied by the terminal equipment, the terminal equipment deems that the configured grant occasion is a valid configured grant occasion (first configured grant occasion).

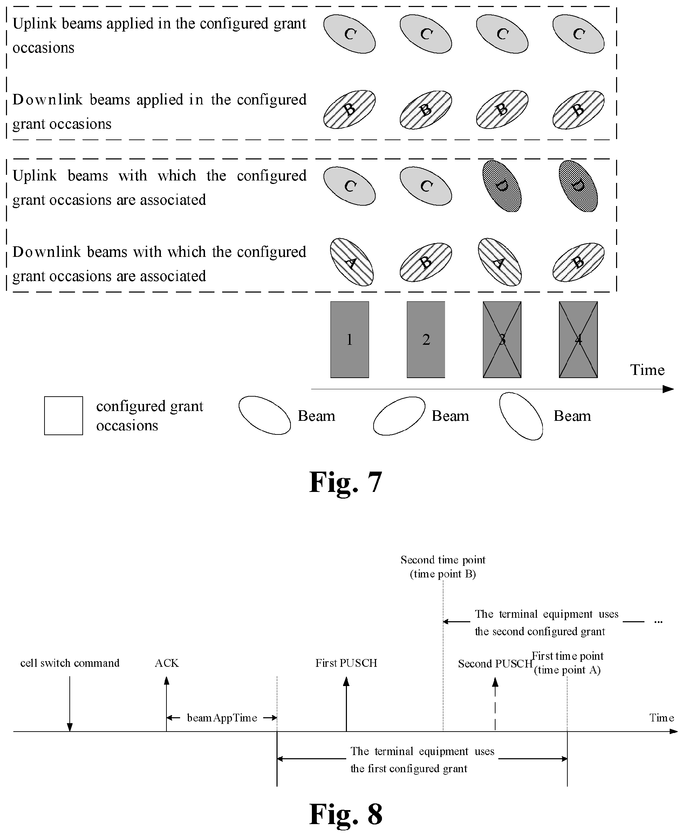

FIG. 7 is a further exemplary diagram of determining the first configured grant of the embodiments of this disclosure. As shown in FIG. 7, for the first configured grant, each configured grant occasion is associated with a pair of beams, i.e. an uplink beam (third uplink beam) and a downlink beam (third downlink beam). In addition, the terminal equipment determines that the uplink beam (fourth uplink beam) and downlink beam (fourth downlink beam) applied in each configured grant occasion. If the third uplink beam is identical to the fourth uplink beam, the terminal equipment may use the configured grant occasion (first configured grant occasion) to transmit PUSCH to the target cell; otherwise, it may not use the configured grant occasion to transmit PUSCH to the target cell. Therefore, the terminal equipment may only use configured grant occasions 1 and 2 in FIG. 7 to transmit PUSCH, and may not use configured grant occasions 3 and 4 to transmit PUSCH.

For example, in FIGs. 6 and 7, the "uplink beam" is replaced with "an uplink TCI state", and the "downlink beam" is replaced with "a downlink TCI state", and FIGs. 6 and 7 may be taken as examples of a separate TCI state. What are associated with the configured grant occasion are an uplink TCI state and a downlink TCI state, and what are associated with the configured grant occasion are an uplink TCI state and a downlink TCI state.

In some embodiments, the terminal equipment may be configured with multiple first configured grants. For example, the terminal equipment has multiple active first configured grants, and the terminal equipment performs the above operations on each first configured grant to determine whether it may use a configured grant occasion of the first configured grant to transmit PUSCH; and after the first time point, the terminal equipment does not use the first configured grant to transmit PUSCH.

In some embodiments, the method further includes: uplink data transmitted to the target cell including an indication of the downlink beam.

For example, the configured grant occasions of the first configured grant are associated with the uplink beams. The terminal equipment transmits PUSCH to the target cell on a certain configured grant occasion, and includes the indication of the downlink beam in the PUSCH. After the target cell successfully receives the PUSCH on the configured grant occasion, it may obtain the uplink beam according to the association between the configured grant occasions and the uplink beams, and obtain the downlink beam according to the indication of the downlink beam in the PUSCH. For example, when unifiedTCI-StateType of the target cell is configured as being separate, the uplink data transmitted to the target cell include the indication of the downlink beam. For example, the indication of the downlink beam may be a TCI state ID or an SSB index.

Thus, by introducing the association between configured grant occasions and the uplink beams and/or downlink beams, the target cell may successfully complete reception on a configured grant occasion, and obtain information of the uplink beam and/or downlink beam used by the terminal equipment after switching, and the source cell does not need to notify the target cell of beam information, thereby reducing interruption times. And for the first configured grant, as a configured grant occasion of the first configured grant that is only associated with a specific beam is available for uplink transmission, there exists resource waste. By restricting the terminal equipment from using the first configured grant within a certain time range only, the resource waste may be reduced.

In some embodiments, the association between the configured grant occasions of the first configured grant and the uplink beams and/or downlink beams includes that: the configured grant occasion of the first configured grant is associated with a first reference signal and/or a second reference signal.

In some embodiments, that the uplink beam associated with the first configured grant occasion is identical to uplink beam applied on the first configured grant occasion includes that: the configured grant occasion of the first configured grant is associated with the first reference signal, wherein the associated first reference signal is a reference signal in a joint TCI state or an uplink TCI state or a TCI state applied on the first configured grant occasion, or is quasi-colocated with a reference signal in a joint TCI state or an uplink TCI state or a TCI state applied on the first configured grant occasion.

In some embodiments, that the downlink beam associated with the first configured grant occasion is identical to downlink beam applied on the first configured grant occasion comprises that: the configured grant occasion of the first configured grant is associated with the second reference signal, wherein the associated second reference signal is a reference signal in a joint TCI state or a downlink TCI state or a TCI state applied on the first configured grant occasion, or is quasi-colocated with a reference signal in a joint TCI state or a downlink TCI state or a TCI state applied on the first configured grant occasion.

For example, that 'the configured grant occasion of the first configured grant is associated with the uplink beam and/or the downlink beam' may be equivalently replaced with that 'the configured grant occasion of the first configured grant is associated with the first reference signal and/or the second reference signal', and that 'the uplink beam associated with the first configured grant occasion is identical to the uplink beam applied on the first configured grant occasion' may be equivalently replaced with that 'the first reference signal associated with the first configured grant occasion is a reference signal in the joint TCI state or uplink TCI state or TCI state applied on the first configured grant occasion', or that 'the first reference signal associated with the first configured grant occasion is quasi-colocated with the reference signal in the joint TCI state or uplink TCI state or TCI state applied on the first configured grant occasion'; that "the downlink beam associated with the first configured grant occasion is identical to the downlink beam applied on the first configured grant occasion' may be equivalently replaced with that 'the second reference signal associated with the first configured grant occasion is a reference signal in the joint TCI state or downlink TCI state or TCI state applied on the first configured grant occasion', or that 'the second reference signal associated with the first configured grant occasion is quasi-colocated with the reference signal in the joint TCI state or downlink TCI state or TCI state applied on the first configured grant occasion'.

For example, as the beams may be determined according to reference signals, that "the beams" may be equivalently replaced with "the reference signals", and that "the configured grant occasion is associated with the uplink beam and/or the downlink beam" may be equivalently replaced with that "the configured grant occasion is associated with the first reference signal and/or the second reference signal". Here, "the first reference signal" and "the second reference signal" are used to distinguish and correspond to the uplink beam and downlink beam. In this case, that 'the beam associated with the first configured grant occasion is identical to the beam applied on the first configured grant occasion' may be equivalently replaced with that 'the reference signal associated with the first configured grant occasion is the reference signal in the TCI state applied on the first configured grant occasion', or that 'the reference signal associated with the first configured grant occasion is quasi-colocated with the reference signal in the TCI state applied on the first configured grant occasion', wherein the reference signal in the TCI state refers to a source reference signal used to determine a quasi-colocation relationship. Furthermore, for the 'uplink beam', 'the joint TCI state or the uplink TCI state' may be used accordingly, and for 'the downlink beam', 'the joint TCI state or downlink TCI state' may be used accordingly.

In some embodiments, the first reference signal and/or the second reference signal include(s): a measurement system synchronization block (SSB), or a channel state information reference signal (CSI-RS), or a tracking reference signal (TRS).

For example, there is an association between the configured grant occasion and the reference signals, and the reference signal may be SSBs, CSI-RSs, or TRSs.

In some embodiments, that the terminal equipment uses the TCI state to transmit PUSCH denotes that the terminal equipment determines an uplink transmission spatial filter (UL TX spatial filter) for the PUSCH according to the reference signals in the TCI state.

In some embodiments, the method further includes: 303: the terminal equipment transmits uplink data to the target cell by using a second configured grant occasion of a second configured grant after a second time point.

In some embodiments, there exists no association between configured grant occasions of the second configured grant and the uplink beams and/or the downlink beams.

In some embodiments, the method further includes: transmits uplink data to the target cell by using the first configured grant first, and then transmits uplink data to the target cell by using the second configured grant.

In some embodiments, the first configured grant is configured grant type 1, and the second configured grant is configured grant type 1 or configured grant type 2.

For example, the first configured grant is configured grant type 1. For example, after radio resource control (RRC) signaling configures configured grant type 1, the terminal equipment may use the configured grant occasion to perform uplink transmission. The second configured grant is configured grant type 1 or configured grant type 2. For example, in a case where the second configured grant is configured grant type 2, after radio resource control (RRC) signaling configures configured grant type 2, the terminal equipment may perform uplink transmissions by using the configured grant occasion only after downlink control information (DCI) activation.

The signaling process for transmitting uplink data shall be described below with reference to settings of "the first time point" and "the second time point":
FIG. 8 is another exemplary diagram of transmitting uplink data of the embodiments of this disclosure. For example, as shown in FIG. 8, starting from the second time point (time point B), the terminal equipment may use the second configured grant to transmit PUSCH to the target cell. Unlike the first configured grant, there is no association between the configured grant occasions of the second configured grant and the beams. For example, the second configured grant is a legacy configured grant, and the terminal equipment transmits PUSCH to the target cell by using the second configured grant according to the related art. For example, the terminal equipment may be configured with multiple second configured grants, for example, the terminal equipment has multiple active second configured grants; and before the second time point, the terminal equipment does not use the second configured grant to transmit PUSCH.

For example, a first PUSCH shown in FIG. 8 is transmitted before the first time point and the second time point, and the terminal equipment may only use the first configured grant to transmit the first PUSCH; a second PUSCH shown in FIG. 8 is transmitted after the second time point, and the terminal equipment may use the second configured grant to transmit the second PUSCH; the second PUSCH shown in FIG. 8 is also transmitted before the first time point, and the terminal equipment may also use the first configured grant to transmit the second PUSCH; and for PUSCH after the second time point and before the first time point, the terminal equipment may use not only the second configured grant to transmit the PUSCH, but also the first configured grant to transmit the PUSCH, and the terminal equipment may determine whether to use the second configured grant or the first configured grant to transmit the PUSCH by itself.

Thus, by restricting the terminal equipment from using the first configured grant only within a certain time range, the above resource waste may be reduced.

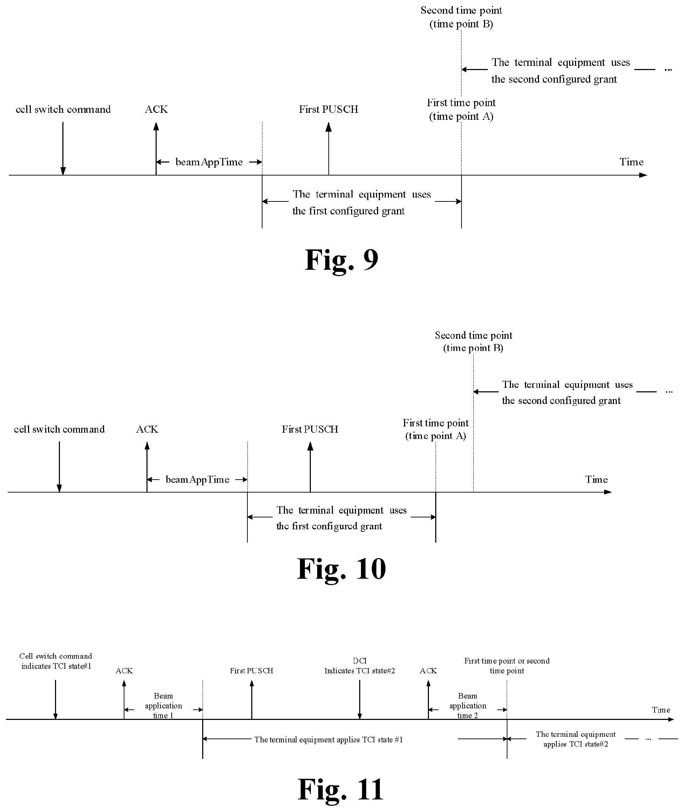

FIG. 9 is a further exemplary diagram of transmitting uplink data of the embodiments of this disclosure, and FIG. 10 is still another exemplary diagram of transmitting uplink data of the embodiments of this disclosure.

For example, there is no restriction on an order in time domain of the second time point and the first time point. As shown in FIG. 8, the second time point is before the first time point, as shown in FIG. 9, the second time point is identical to the first time point, and as shown in FIG. 10, the second time point is after the first time point. However, regardless of how the first time point and the second time point are determined, it is always guaranteed that the terminal equipment may start using the first configured grant before the second configured grant. Therefore, the first configured grant is used by the terminal equipment in transmitting the first PUSCH to the target cell. Optionally, the terminal equipment may continue to use the first configured grant or use the second configured grant to transmit PUSCH to the target cell after the first PUSCH.

Therefore, for the first configured grant, only a configured grant occasion associated with a specific beam may be used for uplink transmission, resulting in resource waste. For the second configured grant, all configured grant occasions may be used for uplink transmission, hence, there exists no resource waste. By restricting the terminal equipment to use the first configured grant only within a certain time range and restricting the terminal equipment from using the second configured grant within another time range, it is possible to further reduce the above resource waste and improve resource utilization of configured grants while ensuring that the target cell may quickly obtain information of uplink beam and/or downlink beam after switching.

How to determine the "first time point" and/or the "second time point" shall be described below by way of examples.

In some embodiments, the first time point and/or the second time point is/are determined according to at least one of the following: determining that uplink data transmitted for the first time to the target cell has been successfully received; applying a TCI state different from a TCI state indicated by the first indication information; applying a TCI state from a TCI state pool different from a TCI state pool used for L1/L2 triggered mobility (LTM); the first configured grant is released; or the second configured grant is configured.

For example, the first time point or the second time point is determined according to that the terminal equipment determines that uplink data transmitted for the first time to the target cell has been successfully received. For example, after receiving the cell switch command, the terminal equipment uses the first configured grant to transmit the first PUSCH to the target cell. At a later time point, the terminal equipment determines that the first PUSCH has been successfully received by the target cell, which denotes that the terminal equipment determines that the uplink data transmitted for the first time to the target cell has been successfully received. This time point may be taken as the first time point or the second time point. For another example, after receiving the cell switch command, the terminal equipment uses the first configured grant to transmit the first PUSCH (initial transmission) to the target cell, but the PUSCH is not successfully received by the target cell. Therefore, the terminal equipment continues to use the first configured grant to transmit a PUSCH(retransmission) to the target cell, regardless of whether it is initial transmission or a retransmission, and what are carried by the PUSCH are the uplink data transmitted for the first time to the target cell, such as an RRC reconfiguration complete (RRCReconfigurationComplete) message. At a later time point, the terminal equipment determines that the uplink data transmitted for the first time to the target cell has been successfully received, and this time point may be taken as the first time point or the second time point.

For example, that 'the terminal equipment determines that the uplink data transmitted for the first time to the target cell has been successfully received' may also be equivalently replaced with that 'the terminal equipment determines for the first time that the uplink data transmitted to the target cell has been successfully received '.

For example, the first time point or second time point is determined according to that the terminal equipment applies a TCI state different from the TCI state indicated by the cell switch command. For example, the first indication information (cell switch command) indicates TCI state #1 applied for uplink transmission on the target cell, hence, the terminal equipment applies TCI state #1. Afterwards, the target cell may indicate that the terminal equipment applies a TCI state different from TCI state #1, and a different TCI state indicated for the first time is referred to as TCI state #2. The terminal equipment starts applying TCI state #2 at a certain time point, and the time point may be taken as the first time point or second time point. The target cell may use the second indication information (DCI) to indicate TCI state #2. For example, an MAC CE may be used first to activate multiple TCI states, and then use the DCI to indicate a TCI state as TCI state #2 in the multiple activated TCI states. And the target cell may also use the third indication information (MAC CE) to indicate TCI state #2. For example, an MAC CE may be used to activate one TCI state, and this TCI state is TCI state #2.

FIG. 11 is yet another exemplary diagram of transmitting uplink data of the embodiments of this disclosure. As shown in FIG. 11, after receiving the cell switch command indicating TCI state #1, the terminal equipment further receives the DCI indicating TCI state #2, and starts applying TCI state #2 at a certain time point after beam application time 2, and this time point may be used as the first time point, or may be used as the second time point. That "the first time point or second time point is determined according to that the terminal equipment applies a TCI state different from the TCI state indicated by the cell switch command" also includes that, for example, when the terminal equipment receives a signaling indicating TCI state #2 transmitted by the target cell at a certain time point, and the time point may be taken as the first time point or second time point, and for another example, the terminal equipment receives signaling indicating TCI state #2 transmitted by the target cell, and transmits ACK associated with the signaling at a certain time point, and the time point may be taken as the first time point or the second time point.

For example, the first time point or the second time point is determined according to that the terminal equipment applies a TCI state from a TCI state pool different from an LTM TCI state pool. The serving cell (source cell) configures the LTM TCI state pool for the terminal equipment before transmitting the cell switch command (marked as a first step), and indicates a TCI state in the LTM TCI state pool in the cell switch command (marked as a second step). Optionally, the serving cell may activate at least one TCI state in the LTM TCI state pool for the terminal equipment between the first step and the second step, hence, the TCI state indicated by the cell switch command is from the LTM TCI state pool. Before transmitting the cell switch command, the serving cell provides a candidate cell configuration to the terminal equipment, which may include a TCI state pool used by the terminal equipment after switching to the target cell, i.e. a legacy TCI state pool (different from the LTM TCI state pool). The TCI state pool may be dl-OrJointTCI-StateList (when unifiedTCI State Type is configured as being joint or separate), or may be ul-TCI-StateList (when unifiedTCI State Type is configured as being separate). After the cell switch command, the target cell may indicate a TCI state in the LTM TCI state pool, and/or may indicate a TCI state in the legacy TCI state pool, such as activating the TCI state by using an MAC CE and/or indicating the TCI state by using DCI. At a certain time point, the terminal equipment applies the TCI state in the legacy TCI state pool for the first time, and the time point may be taken as the first time point, or may be taken as the second time point.

For example, still taking FIG. 11 as an example, a difference from the above description exists that TCI state #2 is limited to being from a TCI state pool different from the LTM TCI state pool, i.e. a legacy TCI state pool. If TCI state #2 is from the LTM TCI state pool, it is not used to determine the first time point or the second time point. That "the first time point or the second time point is determined according to that the terminal equipment applies a TCI state from a TCI state pool different from an LTM TCI state pool" also includes that, for example, at a certain time point, the terminal equipment receives signaling indicating TCI state #2 in the legacy TCI state pool transmitted by the target cell, and the time point may be taken as the first time point or the second time point, and for example, the terminal equipment receives signaling indicating TCI state #2 from the legacy TCI state pool transmitted by the target cell, and transmits ACK associated with the signaling at a certain time point, and the time point may be taken as the first time point or the second time point.

For example, the first time point or the second time point is determined according to that the first configured grant is released. The terminal equipment receives signaling from the target cell indicating that the first configured grant is released, and at a certain time point, the terminal equipment releases a relevant configuration of the first configured grant, and the time point may be taken as the first time point or the second time point.

For example, the first time point or the second time point is determined according to that the second configured grant is configured. The terminal equipment receives signaling from the target cell indicating that the second configured grant is configured (i.e. signaling configuring the second configured grant), and at a certain time point, the terminal equipment applies the second configured grant, and the time point may be taken as the first time point or the second time point.

In some embodiments, that the uplink data transmitted for the first time to the target cell has been successfully received is determined according to at least one of the following that: DCI without DL assignment is received; a UE contention resolution identity MAC CE is received; DCI with CRC scrambled by a C-RNTI is received; and radio link control (RLC) layer ACK for the uplink data transmitted for the first time to the target cell is received.

For example, in the case where the DCI without DL assignment is received, the terminal equipment determines that the uplink data transmitted for the first time to the target cell has been successfully received. Reference may be made to the definition of DCI format 1_1/1_2 without DL assignment in sub-section 5.1.5 of TS 38.214 V17.6.0 for a definition of the DCI without DL assignment. For example, if the DCI without DL assignment is received for the first time, the terminal equipment determines that the uplink data transmitted for the first time to the target cell has been successfully received, that is, the DCI is interpreted as indicating that the uplink data transmitted for the first time to the target cell has been successfully received, and if the DCI without DL assignment is received subsequently, the terminal equipment interprets it according to existing standards. For another example, a specific field of the DCI without DL assignment is set to be a specific value, which is used to indicate that the uplink data transmitted for the first time to the target cell has been successfully received.

For example, in the case of where the UE contention resolution identity MAC CE is received, the terminal equipment determines that the uplink data transmitted for the first time to the target cell has been successfully received. Reference may be made to sub-section 6.1.3.3 of TS 38.321 V17.5.0 for a definition of the UE contention resolution identity MAC CE, which shall not be described in detail in this disclosure.

For example, in the case where the DCI with CRC scrambled by a C-RNTI is received, the terminal equipment determines that the uplink data transmitted for the first time to the target cell has been successfully received. For example, if the terminal equipment receives the DCI with CRC scrambled by a C-RNTI and a PUSCH scheduled by the DCI has an HARQ process ID identical to that of the uplink data transmitted for the first time to the target cell, the terminal equipment determines that the uplink data transmitted for the first time to the target cell has been successfully received.

For example, in the case where the radio link control layer ACK for the uplink data transmitted for the first time to the target cell is received, the terminal equipment determines that the uplink data transmitted for the first time to the target cell has been successfully received. The uplink data transmitted for the first time to the target cell may be an RRC reconfiguration complete message.

In some embodiments, the first time point and the second time point may be identical or different.

For example, both the first time point and the second time point are determined according to one of the methods described above, i.e. they are determined according to the same method, hence, the first time point and the second time point are identical. For example, the first time point and the second time point are determined respectively according to the methods described above, i.e. they may be determined according to different methods. For example, the first time point and the second time point shown in FIG. 8 and FIG. 10 are different. As shown in FIG. 8, the second time point may be before the first time point in time. For example, as shown in FIG. 10, the second time point may be after the first time point in time. For example, the first time point and the second time point shown in FIG. 9 are identical.

Thus, the terminal equipment may determine the first time point and the second time point, the terminal equipment is restricted from using the first configured grant before the first time point, and the terminal equipment is restricted from using the second configured grant after the second time point, which may further reduce resource waste and improve resource utilization of the configured grant while ensuring that the target cell may quickly obtain information the uplink beam and/or the downlink beam after switching.

In some embodiments, the method further includes: 304: the terminal equipment is configured with a first configured grant and/or a second configured grant.

For example, the terminal equipment is separately configured with the first configured grant and the second configured grant. For example, the terminal equipment is configured with the first configured grant, and is configured with the second configured grant, and the first configured grant and the second configured grant are configured separately. The terminal equipment may at least determine a configured grant occasion of the first configured grant and uplink beam and/or downlink beam associated with the configured grant occasion according to a configuration of the first configured grant, and the terminal equipment may at least determine a configured grant occasion of the second configured grant according to a configuration of the second configured grant. Thus, the first configured grant and the second configured grant may be determined.

In some embodiments, the terminal equipment determines the second configured grant according to the configured first configured grant.

For example, the terminal equipment is configured with the first configured grant, and the configuration of the first configured grant includes first configuration information, wherein an association between the configured grant occasions and the uplink beams and/or the downlink beams is determined according to the first configuration information. The terminal equipment determines the second configured grant according to the first configured grant, and the configuration of the second configured grant includes configuration information in the first configured grant other than the first configuration information. In other words, the second configured grant is the first configured grant with configured grant occasions not associated with the uplink beams and/or the downlink beams.

In some embodiments, the association between the configured grant occasions of the first configured grant and the uplink beams and/or the downlink beams is determined according to the first configuration information, wherein the first configuration information is included in the configuration of the first configured grant.

For example, the terminal equipment transmits PUSCH to the target cell by using the uplink beam applied on the first configured grant occasion or the uplink beam associated with the first configured grant occasion.

For example, the configuration of the first configured grant includes the first configuration information, the first configuration information includes a beam set and/or the number of beams with which each configured grant occasion is associated, and the configured grant occasions are associated with the beams according to a rule. For example, Table 1 is an exemplary diagram of IEs of "the first configured grant". As shown in Table 1, the first configured grant is configured by CG-Configuration. CG-Configuration includes the first configuration information, the first configuration information including an SSB set (SSB-Subset) and the number of SSBs (SSB-PerCG-PUSCH) with which each configured grant occasion is associated, and CG-Configuration may further include other information, such as information used to determine configured grant occasions, MCS levels, and PMIs, etc.

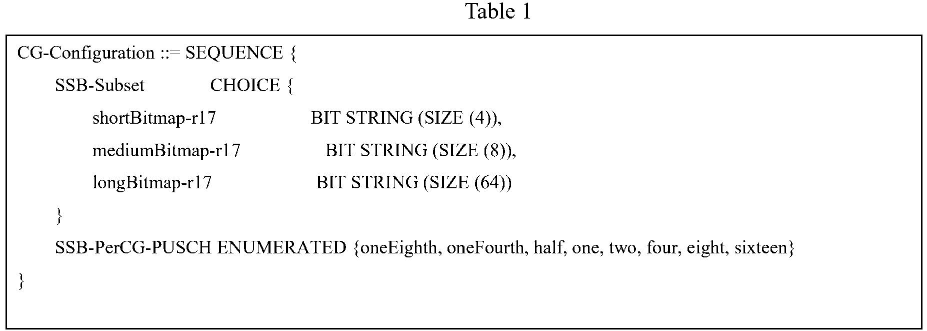

In some embodiments, the first configured grant and/or the second configured grant are configured in a candidate cell configuration; or, the first configured grant and/or the second configured grant are configured outside of a candidate cell configuration.

For example, the first configured grant and/or the second configured grant are configured in the candidate cell configuration.

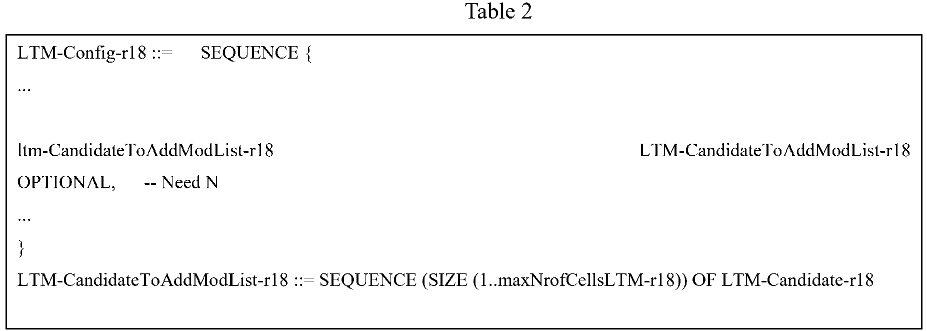

For example, Table 2 is an example of an LTM configuration, wherein the serving cell provides the candidate cell configuration to the terminal equipment before transmitting the cell switch command. As shown in Table 2, the LTM configuration (LTM-Config) includes the candidate cell configuration, and the candidate cell configuration is provided (or configured) by ltm-CandidateToAddModList, which may provide candidate cell configurations (LTM-Candidates) of one or more candidate cells, and a first configured grant and/or a second configured grant of a candidate cell is/are configured in a candidate cell configuration (LTM-Candidate) associated with the candidate cell. If the terminal equipment switches to a candidate cell, the candidate cell becomes the target cell.

For example, the candidate cell configuration includes the configuration of the first configured grant and the configuration of the second configured grant, and the configuration of the first configured grant and the configuration of the second configured grant are separately, that is, the first configured grant and the second configured grant are separately configured.

For example, the candidate cell configuration includes the configuration of the first configured grant, and the configuration of the second configured grant is determined according to the configuration of the first configured grant.

For example, the first configured grant and/or the second configured grant is/are configured outside of the candidate cell configuration.

For example, as shown in Table 2, a first configured grant and/or a second configured grant of a candidate cell is/are not configured in a candidate cell configuration (LTM-Candidate) associated with the candidate cell, but is/are configured in an information element (IE) in the LTM configuration (LTM-Config) different from ltm-CandidateToAddModList.

Thus, the association between the configured grant occasions of the first configured grant and uplink beams and/downlink beams may be determined according to the first configuration information, and the first configured grant and/or the second configured grant may be determined.

In some embodiments, the determining that the uplink data transmitted for the first time to the target cell has been successfully received includes: determining for the first time that the uplink data transmitted to the target cell has been successfully received.

For example, after receiving the cell switch command, the terminal equipment transmits the first PUSCH (initial transmission) to the target cell by using the configured grant occasion of the first configured grant, and in a case where the first PUSCH is not successfully received, the terminal equipment continues to transmit a second PUSCH (retransmission) by using the configured grant occasion of the first configured grant, and the second PUSCH is successfully received. At this time, "the terminal equipment determines for the first time that the PUSCH transmitted to the target cell has been successfully received" actually means that the second PUSCH is successfully received.

In some embodiments, when the terminal equipment determines that the uplink data transmitted for the first time to the target cell has been successfully received, the terminal equipment deems that LTM execution has been successfully completed.

In some embodiments, the method further includes: deeming that the first configured grant is released after the first time point.

For example, after the first time point, the first configured grant is released, and a time-frequency resource where the configured grant occasion of the first configured grant is located may be used by the target cell to schedule other uplink or downlink transmissions, thereby effectively improving resource utilization.

Therefore, for the first configured grant, only a configured grant occasion thereof associated with a specific beam may be used for uplink transmission, thereby resulting in resource waste. This causes the first configured grant to be released after a certain period of time, which may reduce the above resource waste.

In some embodiments, the transmitting uplink data to the target cell by using the first configured grant occasion of the first configured grant includes: transmitting first uplink data to the target cell by using the first configured grant after determining according to the second configuration information that the first indication information is received.

For example, the method described above is applicable to a specific type of terminal equipment. For the specific type of terminal equipment, after receiving the cell switch command, the terminal equipment transmits the first PUSCH to the target cell by using the first configured grant. For example, after the terminal equipment is configured by the second configuration information to receive the cell switch command, the terminal equipment transmits the first PUSCH to the target cell by using the first configured grant. For example, if the terminal equipment is configured with the first configured grant by the second configuration information, the terminal equipment transmits the first uplink data to the target cell by using the first configured grant after receiving the cell switch command, and if the terminal equipment is not configured with the first configured grant, it transmits the first uplink data to the target cell by using a dynamic grant or the configured second configured grant.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

### Embodiments of a second aspect

The embodiments of this disclosure provide a data transmission method, applicable to a network device side. The embodiments of this disclosure may be combined with the embodiments of the first aspect, or may be implemented separately. Contents identical to those in the embodiments of the first aspect shall not be repeated herein any further.

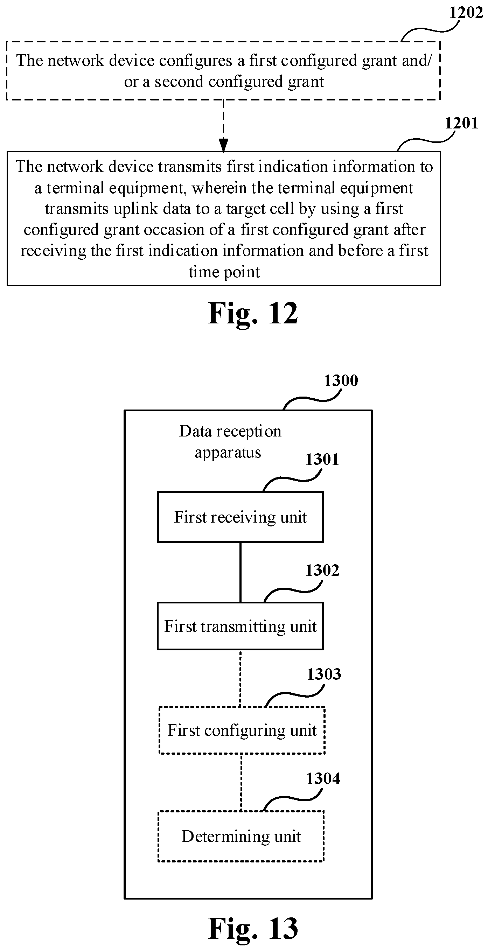

FIG. 12 is a schematic diagram of the data transmission method of the embodiments of this disclosure. As shown in FIG. 12, the method includes:
1201: the network device transmits first indication information to a terminal equipment, wherein the terminal equipment transmits uplink data to a target cell by using a first configured grant occasion of a first configured grant after receiving the first indication information and before a first time point.

Thus, the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

In some embodiments, the term 'network device' may be, for example, equivalently replaced with 'serving cell' or 'source cell', such as 'the first network device 101' shown in FIG. 1, and the 'target cell' includes, for example, 'the second network device 102' shown in FIG. 1.

In some embodiments, the configured grant occasions of the first configured grant are associated with uplink beams and/or downlink beams.

In some embodiments, the configured grant occasions of the first configured grant include the first configured grant occasion.

In some embodiments, the uplink beam associated with the first configured grant occasion is identical to the uplink beam applied on the first configured grant occasion, and/or, the downlink beam associated with the first configured grant occasion is identical to the downlink beam applied on the first configured grant occasion.

In some embodiments, that the configured grant occasion of the first configured grant is associated with an uplink beam and/or a downlink beam includes that: the configured grant occasion of the first configured grant is associated with a first reference signal and/or a second reference signal.

In some embodiments, that the uplink beam associated with the first configured grant occasion is identical to the uplink beam applied on the first configured grant occasion includes that: the configured grant occasion of the first configured grant is associated with the first reference signal, wherein the associated first reference signal is a reference signal in a joint TCI state or an uplink TCI state or a TCI state applied on the first configured grant occasion, or is quasi-colocated with a reference signal in a joint TCI state or an uplink TCI state or a TCI state applied on the first configured grant occasion.

In some embodiments, that the downlink beam associated with the first configured grant occasion is identical to the downlink beam applied on the first configured grant occasion includes that: the configured grant occasion of the first configured grant is associated with the second reference signal, wherein the associated second reference signal is a reference signal in a joint TCI state or a downlink TCI state or a TCI state applied on the first configured grant occasion, or is quasi-colocated with a reference signal in a joint TCI state or a downlink TCI state or a TCI state applied on the first configured grant occasion.

In some embodiments, the method further includes: 1202: the network device configures a first configured grant and/or a second configured grant.

It should be noted that FIG. 12 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced. Furthermore, objects of the above operations may be adjusted. And appropriate variants may be made by those skilled in the art according to the above contents, without being limited to what is contained in FIG. 12.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiment that the terminal equipment receives the first indication information, and after the first indication information is received and before a first time point, transmits uplink data to a target cell by using a first configured grant occasion of a first configured grant. Hence, the target cell may quickly obtain information of the uplink beam and/or the downlink beam after switch, thereby reducing interruption times, and the terminal equipment may use resources of the configured grant more efficiently, thereby improving a successful rate of uplink transmission and resource utilization rate.

### Embodiments of a third aspect

The embodiments of this disclosure provide a data reception apparatus. The apparatus may be, for example, a terminal equipment, or one or some components or assemblies configured in the terminal equipment. Contents in the embodiments identical to those in the embodiments of the first aspect shall not be described herein any further.

FIG. 13 is a schematic diagram of the data reception apparatus of the embodiments of this disclosure. As shown in FIG. 13, the data reception apparatus 1300 includes:
a first receiving unit 1301 configured to receive first indication information; and
a first transmitting unit 1302 configured to, after the first indication information is received and before a first time point, transmit uplink data to a target cell by using a first configured grant occasion of a first configured grant.

Thus, the terminal equipment receives the first indication information, and after the first indication information is received and before a first time point, transmits uplink data to a target cell by using a first configured grant occasion of a first configured grant. Hence, the target cell may quickly obtain information of the uplink beam and/or the downlink beam after switch, thereby reducing interruption times, and the terminal equipment may use resources of the configured grant more efficiently, thereby improving a successful rate of uplink transmission and resource utilization rate.

In some embodiments, configured grant occasions of the first configured grant are associated with uplink beams and/or downlink beams, and the configured grant occasions of the first configured grant include the first configured grant occasion.

In some embodiments, the uplink beams associated with the first configured grant occasion are identical to uplink beams applied on the first configured grant occasion, and/or the downlink beams associated with the first configured grant occasion are identical to downlink beams applied on the first configured grant occasion.

In some embodiments, the uplink beam applied on the first configured grant occasion and/or the downlink beam applied on the first configured grant occasion are indicated by the first indication information, or second indication information, or third indication information, wherein the first indication information at least includes a cell switch command, the second indication information at least includes downlink control information (DCI), and the third indication information at least includes an MAC control element (MAC CE).

In some embodiments, the first transmitting unit 1302 further transmits uplink data to the target cell by using a second configured grant occasion of a second configured grant after a second time point.

In some embodiments, there exists no association between configured grant occasions of the second configured grant and the uplink beams and/or the downlink beams.

In some embodiments, the first transmitting unit 1302 further transmits uplink data to the target cell by using the first configured grant first, and then transmits uplink data to the target cell by using the second configured grant.

In some embodiments, the first time point and/or the second time point is/are determined according to at least one of the following: determining that uplink data transmitted for the first time to the target cell has been successfully received; applying a transmission configuration indication (TCI) state different from a transmission configuration indication (TCI) state indicated by the first indication information; applying a transmission configuration indication (TCI) state from a transmission configuration indication (TCI) state pool different from a transmission configuration indication (TCI) state pool used for L1/L2 triggered mobility (LTM); the first configured grant is released; or the second configured grant is configured.

In some embodiments, that the uplink data transmitted for the first time to the target cell has been successfully received is determined according to at least one of the following that: DCI without downlink (DL) assignment is received; a UE content resolution identity MAC CE is received; DCI with cyclic redundancy check (CRC) scrambled by a cell radio network temporary identifier (C-RNTI) is received; and radio link control (RLC) layer acknowledgement (ACK) of the uplink data transmitted to the target cell for the first time is received.

In some embodiments, that determining that uplink data transmitted for the first time to the target cell has been successfully received includes that: determining for the first time that the uplink data transmitted to the target cell has been successfully received .

In some embodiments, the data reception apparatus 1300 further includes: a determining unit 1304 configured to, after the first time point, deem that the first configured grant is released.

In some embodiments, the first time point and the second time point are identical or different.

In some embodiments, the data reception apparatus further includes: a first configuring unit 1303 configured to be configured with the first configured grant and/or the second configured grant.

In some embodiments, the first configuring unit 1303 determines the second configured grant according to the configured first configured grant.

In some embodiments, the first configuring unit 1303 is configured with the first configured grant and/or the second configured grant in a candidate cell configuration; or, the first configuring unit 1303 is configured with the first configured grant and/or the second configured grant out of a candidate cell configuration.

In some embodiments, the first configuring unit 1303 determines an association between the configured grant occasions of the first configured grant and the uplink beams and/or downlink beams according to first configuration information, wherein the first configuration information is included in a configuration of the first configured grant.

In some embodiments, the first transmitting unit 1302 further transmits first uplink data to the target cell by using the first configured grant after receiving the first indication information.

In some embodiments, that the association between the configured grant occasion of the first configured grant and an uplink beam and/or a downlink beam includes that: the configured grant occasion of the first configured grant is associated with a first reference signal and/or a second reference signal.

In some embodiments, that the uplink beam associated with the first configured grant occasion are identical to uplink beam applied on the first configured grant occasion includes that: the configured grant occasion of the first configured grant is associated with the first reference signal, wherein the associated first reference signal is a reference signal in a joint transmission configuration indication (TCI) state or an uplink transmission configuration indication (TCI) state or a transmission configuration indication (TCI) state applied on the first configured grant occasion, or is quasi-colocated with a reference signal in a joint transmission configuration indication (TCI) state or an uplink transmission configuration indication (TCI) state or a transmission configuration indication (TCI) state applied on the first configured grant occasion.

In some embodiments, that the downlink beam associated with the first configured grant occasion are identical to downlink beam applied on the first configured grant occasion includes that: the configured grant occasion of the first configured grant is associated with the second reference signal, wherein the associated second reference signal is a reference signal in a joint transmission configuration indication (TCI) state or a downlink transmission configuration indication (TCI) state or a transmission configuration indication (TCI) state applied on the first configured grant occasion, or is quasi-colocated with a reference signal in a joint transmission configuration indication (TCI) state or a downlink transmission configuration indication (TCI) state or a transmission configuration indication (TCI) state applied on the first configured grant occasion.

In some embodiments, the first reference signal and/or the second reference signal include(s) a measurement system synchronization block (SSB), or a channel state information reference signal (CSI-RS), or a tracking reference signal (TRS).

In some embodiments, the first configured grant is configured grant type 1, and/or, the second configured grant is configured grant type 1 or configured grant type 2.

In some embodiments, the uplink beam includes at least one of the following: a joint transmission configuration indication (TCI) state, an uplink transmission configuration indication (TCI) state, or a transmission configuration indication (TCI) state, and the downlink beam includes at least one of the following: a joint transmission configuration indication (TCI) state, a downlink transmission configuration indication (TCI) state, or a transmission configuration indication (TCI) state.

In some embodiments, uplink data transmitted by the first transmitting unit 1302 to the target cell includes an indication of the downlink beam.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception apparatus 1300 may further include other components or modules, and reference may be made to related techniques for particulars of these components or modules.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

### Embodiments of a fourth aspect

The embodiments of this disclosure provide a data transmission apparatus. The apparatus may be, for example, a network device, or one or some components or assemblies configured in the network device. Contents in the embodiments identical to those in the embodiments of the second aspect shall not be described herein any further.

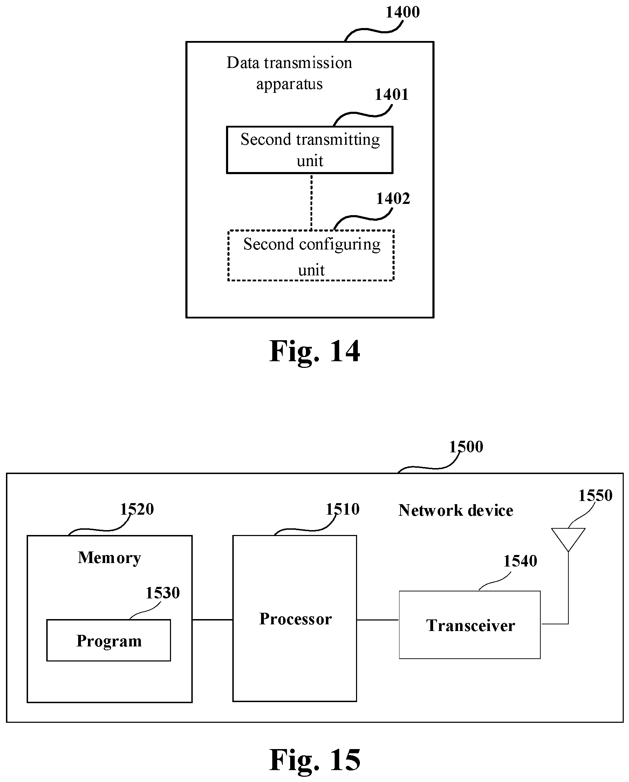

FIG. 14 is a schematic diagram of the data transmission apparatus of the embodiments of this disclosure. As shown in FIG. 14, the data transmission apparatus 1400 includes:
a second transmitting unit 1401configured to transmit first indication information to a terminal equipment, wherein the terminal equipment transmits uplink data to a target cell by using a first configured grant occasion of a first configured grant after receiving the first indication information and before a first time point.

Thus, the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

In some embodiments, the configured grant occasions of the first configured grant are associated with uplink beams and/or downlink beams.

In some embodiments, the configured grant occasions of the first configured grant include the first configured grant occasion.

In some embodiments, the uplink beam associated with the first configured grant occasion is identical to the uplink beam applied on the first configured grant occasion, and/or, the downlink beam associated with the first configured grant occasion is identical to the downlink beam applied on the first configured grant occasion.

In some embodiments, an association between the configured grant occasion of the first configured grant and an uplink beams and/or a downlink beams includes that: the configured grant occasion of the first configured grant is associated with a first reference signal and/or a second reference signal.

In some embodiments, that the uplink beam associated with the first configured grant occasion is identical to the uplink beam applied on the first configured grant occasion includes that the configured grant occasion of the first configured grant is associated with the first reference signal, wherein the associated first reference signal is a reference signal in a joint TCI state or an uplink TCI state or a TCI state applied on the first configured grant occasion, or is quasi-colocated with a reference signal in a joint TCI state or an uplink TCI state or a TCI state applied on the first configured grant occasion.

In some embodiments, that the downlink beam associated with the first configured grant occasion is identical to the downlink beam applied on the first configured grant occasion includes that the configured grant occasion of the first configured grant is associated with the second reference signal, wherein the associated second reference signal is a reference signal in a joint TCI state or a downlink TCI state or a TCI state applied on the first configured grant occasion, or is quasi-colocated with a reference signal in a joint TCI state or a downlink TCI state or a TCI state applied on the first configured grant occasion.

In some embodiments, the data transmission apparatus 1400 further includes: a second configuring unit 1402 configured to configure the first configured grant and/or the second configured grant.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transmission apparatus 1400 may further include other components or modules, and reference may be made to related techniques for particulars of these components or modules.

Furthermore, for the sake of simplicity, connection relationships between the components or modules or signal profiles thereof are only illustrated in FIG. 14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include a network device and a terminal equipment, wherein,
the network device is configured to transmit first indication information;
and the terminal equipment is configured to receive the first indication information, and after the first indication information is received and before a first time point, transmit uplink data to a target cell by using a first configured grant occasion of a first configured grant.

Thus, the terminal equipment receives the first indication information, and after the first indication information is received and before a first time point, transmits uplink data to a target cell by using a first configured grant occasion of a first configured grant. Hence, the target cell may quickly obtain information of uplink beam and/or downlink beam after switch, thereby reducing interruption times, and the terminal equipment may use resources of the configured grant more efficiently, thereby improving a successful rate of uplink transmission and resource utilization rate.

The embodiments of this disclosure further provide a network device, which may be, for example, a base station. However, this disclosure is not limited thereto, and it may also be another network device.

FIG. 15 is a schematic diagram of a structure of the network device of the embodiments of this disclosure. As shown in FIG. 15, the network device 1500 may include a processor 1510 (such as a central processing unit (CPU)) and a memory 1520, the memory 1520 being coupled to the processor 1510. Wherein, the memory 1520 may store various data, and furthermore, it may store a program 1530 for information processing, and execute the program 1530 under control of the processor 1510.

Furthermore, as shown in FIG. 15, the network device 1500 may include a transceiver 1540, and an antenna 1550, etc. Wherein, functions of the above components are similar to those in the related art, and shall not be described herein any further. It should be noted that the network device 1500 does not necessarily include all the parts shown in FIG. 15, and furthermore, the network device 1500 may include parts not shown in FIG. 15, and the related art may be referred to.

The embodiments of this disclosure further provide a terminal equipment; however, this disclosure is not limited thereto, and it may also be another equipment.

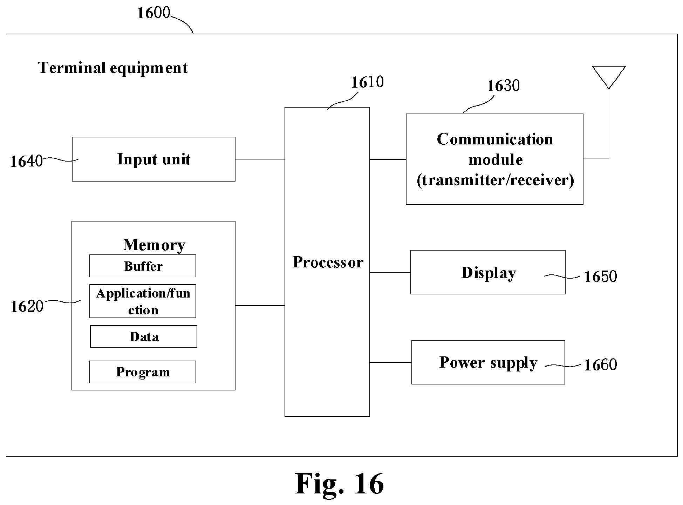

FIG. 16 is a schematic diagram of the terminal equipment of the embodiments of this disclosure. As shown in FIG. 16, the terminal equipment 1600 may include a processor 1610 and a memory 1620, the memory 1620 storing data and a program and being coupled to the processor 1610. It should be noted that this figure is illustrative only, and other types of structures may also be used, so as to supplement or replace this structure and achieve a telecommunications function or other functions.

For example, the processor 1610 may be configured to execute a program to carry out the data reception method as described in the embodiments of the first aspect. For example, the processor 1610 may be configured to execute the following control: receiving first indication information by the terminal equipment; and after the first indication information is received and before a first time point, transmitting uplink data by the terminal equipment to a target cell by using a first configured grant occasion of a first configured grant.

As shown in FIG. 16, the terminal equipment 1600 may further include a communication module 1630, an input unit 1640, a display 1650, and a power supply 1660; wherein functions of the above components are similar to those in the related art, which shall not be described herein any further. It should be noted that the terminal equipment 1600 does not necessarily include all the parts shown in FIG. 16, and the above components are not necessary. Furthermore, the terminal equipment 1600 may include parts not shown in FIG. 16, and the related art may be referred to.

Embodiments of this disclosure provide a computer program, which, when executed in a terminal equipment, will cause the terminal equipment to carry out the data reception method as described in the embodiments of the first aspect.

Embodiments of this disclosure provide a storage medium, including a computer program, which will cause a terminal equipment to carry out the data reception method as described in the embodiments of the first aspect.

Embodiments of this disclosure provide a computer readable program, which, when executed in a terminal equipment, will cause the terminal equipment to carry out the data transmission method as described in the embodiments of the second aspect.

Embodiments of this disclosure provide a storage medium, including a computer program, which will cause a terminal equipment to carry out the data transmission method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. A data reception method, applicable to a terminal equipment, the method including:
   receiving first indication information; and
   after the first indication information is received and before a first time point, transmitting uplink data by the terminal equipment to a target cell by using a first configured grant occasion of a first configured grant.
2. The method according to supplement 1, wherein configured grant occasions of the first configured grant are associated with uplink beams and/or downlink beams.
3. The method according to supplement 2, wherein the configured grant occasions of the first configured grant include the first configured grant occasion.
4. The method according to supplement 3, wherein an uplink beam associated with the first configured grant occasion is identical to an uplink beam applied on the first configured grant occasion, and/or a downlink beam associated with the first configured grant occasion is identical to a downlink beam applied on the first configured grant occasion.
5. The method according to supplement 4, wherein the uplink beam applied on the first configured grant occasion and/or the downlink beam applied on the first configured grant occasion are indicated by the first indication information, or second indication information, or third indication information,
   wherein the first indication information at least includes a cell switch command, the second indication information at least includes downlink control information (DCI), and the third indication information at least includes an MAC control element (MAC CE).
6. The method according to supplement 1, wherein the method further includes: transmitting uplink data to the target cell by using a second configured grant occasion of a second configured grant after a second time point.
7. The method according to supplement 6, wherein there exists no association between configured grant occasions of the second configured grant and the uplink beams and/or the downlink beams.
8. The method according to supplement 1, wherein the method further includes: transmitting uplink data to the target cell by using the first configured grant first, and then transmitting uplink data to the target cell by using the second configured grant.
9. The method according to supplement 1 or 6, wherein the first time point and/or the second time point is/are determined according to at least one of the following:
   determining that uplink data transmitted for the first time to the target cell has been successfully received;
   applying a TCI state different from a TCI state indicated by the first indication information;
   applying a TCI state from a transmission configuration indication (TCI) state pool different from a TCI state pool used for L1/L2 triggered mobility (LTM);
   the first configured grant is released; or
   the second configured grant is configured.
10. The method according to supplement 9, wherein that the uplink data transmitted for the first time to the target cell has been successfully received is determined according to at least one of the following that:
   DCI without downlink (DL) assignment is received;
   a UE content resolution identity MAC CE is received;
   DCI with cyclic redundancy check (CRC) scrambled by a cell radio network temporary identifier (C-RNTI) is received; and
   radio link control (RLC) layer acknowledgement (ACK) of the uplink data transmitted to the target cell for the first time is received.
11. The method according to supplement 10, wherein that determining that uplink data transmitted for the first time to the target cell has been successfully received includes that: determining for the first time that the uplink data transmitted to the target cell has been successfully received .
12. The method according to supplement 1, wherein the method further includes: after the first time point, deeming that the first configured grant is released.
13. The method according to supplement 6, wherein the first time point and the second time point are identical or different.
14. The method according to supplement 6, wherein the method further includes:
   being configured with the first configured grant and/or the second configured grant.
15. The method according to supplement 14, wherein the method further includes:
   determining the second configured grant according to the configured first configured grant.
16. The method according to supplement 14, wherein the method further includes:
   the first configured grant and/or the second configured grant is/are configured in a candidate cell configuration; or,
   the first configured grant and/or the second configured grant is/are configured out of a candidate cell configuration.
17. The method according to supplement 14, wherein the method further includes:
   determining an association between the configured grant occasions of the first configured grant and the uplink beams and/or the downlink beams according to first configuration information, wherein the first configuration information is included in a configuration of the first configured grant.
18. The method according to any one of supplements 13-17, wherein the first configured grant is configured grant type 1, and the second configured grant is configured grant type 1 or configured grant type 2.
19. The method according to supplement 1, wherein the transmitting uplink data to the target cell by using the first configured grant occasion of the first configured grant includes:
   transmitting first uplink data to the target cell by using the first configured grant after receiving the first indication information.
20. The method according to supplement 4, wherein the association between the configured grant occasion of the first configured grant and the uplink beams and/or the downlink beams includes that:
   the configured grant occasion of the first configured grant is associated with a first reference signal and/or a second reference signal.
21. The method according to supplement 20, wherein that the uplink beam associated with the first configured grant occasion is identical to uplink beam applied on the first configured grant occasion includes that: the configured grant occasion of the first configured grant is associated with the first reference signal,
   wherein the associated first reference signal,
   is a reference signal in a TCI state or an uplink TCI state or a TCI state applied on the first configured grant occasion, or
   is quasi-colocated with a reference signal in a joint TCI state or an uplink TCI state or a TCI state applied on the first configured grant occasion.
22. The method according to supplement 20, wherein that the downlink beam associated with the first configured grant occasion is identical to downlink beam applied on the first configured grant occasion includes that: the configured grant occasion of the first configured grant is associated with the second reference signal,
   wherein the associated second reference signal is,
   a reference signal in a joint TCI state or a downlink TCI state or a TCI state applied on the first configured grant occasion, or is quasi-colocated with a reference signal in a joint TCI state or a downlink TCI state or a TCI state applied on the first configured grant occasion.
23. The method according to supplement 21 or 22, wherein the first reference signal and/or the second reference signal is/are an SSB(s), or a CSI-RS(s), or a TRS(s).
24. The method according to supplement 3 or 7, wherein the uplink beam includes at least one of the following: a joint TCI state, an uplink TCI state, or a TCI state, and the downlink beam includes at least one of the following: a joint TCI state, a downlink TCI state, or a TCI state.
25. The method according to supplement 1, wherein the method further includes: uplink data transmitted to the target cell including an indication of the downlink beam.
26. A data transmission method, applicable to a network device, the method including:
   transmitting first indication information to a terminal equipment,
   wherein the terminal equipment transmits uplink data to a target cell by using a first configured grant occasion of a first configured grant after receiving the first indication information and before a first time point.
27. The method according to supplement 26, wherein configured grant occasions of the first configured grant are associated with uplink beams and/or downlink beams.
28. The method according to supplement 27, wherein the configured grant occasions of the first configured grant include the first configured grant occasion.
29. The method according to supplement 28, wherein the uplink beam associated with the first configured grant occasion is identical to the uplink beam applied on the first configured grant occasion, and/or, the downlink beam associated with the first configured grant occasion is identical to the downlink beam applied on the first configured grant occasion.
30. The method according to supplement 29, wherein an association between the configured grant occasion of the first configured grant and the uplink beam and/or the downlink beams includes that:
   the configured grant occasion of the first configured grant is associated with a first reference signal and/or a second reference signal.
31. The method according to supplement 30, wherein that the uplink beam associated with the first configured grant occasion is identical to the uplink beam applied on the first configured grant occasion includes that the configured grant occasion of the first configured grant is associated with the first reference signal,
   wherein the associated first reference signal,
   is a reference signal in a joint TCI state or an uplink TCI state or a TCI state applied on the first configured grant occasion, or
   is quasi-colocated with a reference signal in a joint TCI state or an uplink TCI state or a TCI state applied on the first configured grant occasion.
32. The method according to supplement 30, wherein that the downlink beam associated with the first configured grant occasion is identical to the downlink beam applied on the first configured grant occasion includes that the configured grant occasion of the first configured grant is associated with the second reference signal,
   wherein the associated second reference signal,
   is a reference signal in a joint TCI state or a downlink TCI state or a TCI state applied on the first configured grant occasion, or
   is quasi-colocated with a reference signal in a joint TCI state or a downlink TCI state or a TCI state applied on the first configured grant occasion.
33. The method according to supplement 26, wherein the method further includes: configuring a first configured grant and/or a second configured grant.
34. A terminal equipment, including a memory and a processor, the memory storing a computer program, and the processor being configured to execute the computer program to carry out the method as described in any one of supplements 1-25.
35. A network device, including a memory and a processor, the memory storing a computer program, and the processor being configured to execute the computer program to carry out the method as described in any one of supplements 26-33.
36. A communication system, including:
   a network device configured to transmit first indication information; and
   a terminal equipment configured to receive the first indication information, and after the first indication information is received and before a first time point, transmit uplink data to a target cell by using a first configured grant occasion of a first configured grant.

## Claims

1. A data reception apparatus, configured in a terminal equipment, wherein the data reception apparatus comprises:
a first receiving unit configured to receive first indication information; and
a first transmitting unit configured to, after the first indication information is received and before a first time point, transmit uplink data to a target cell by using a first configured grant occasion of a first configured grant.

2. The apparatus according to claim 1, wherein configured grant occasions of the first configured grant are associated with uplink beams and/or downlink beams, and the configured grant occasions of the first configured grant comprise the first configured grant occasion.

3. The apparatus according to claim 2, wherein the uplink beam associated with the first configured grant occasion is identical to the uplink beam applied on the first configured grant occasion, and/or the downlink beam associated with the first configured grant occasion is identical to the downlink beam applied on the first configured grant occasion.

4. The apparatus according to claim 3, wherein the uplink beam applied on the first configured grant occasion and/or the downlink beam applied on the first configured grant occasion are indicated by the first indication information, or second indication information, or third indication information,
wherein the first indication information at least comprises a cell switch command, the second indication information at least comprises downlink control information (DCI), and the third indication information at least comprises an MAC control element (MAC CE).

5. The apparatus according to claim 1, wherein the first transmitting unit further,
transmits uplink data to the target cell by using a second configured grant occasion of a second configured grant after a second time point.

6. The apparatus according to claim 5, wherein there exists no association between configured grant occasions of the second configured grant and the uplink beams and/or the downlink beams.

7. The apparatus according to claim 5, wherein the first time point and/or the second time point is/are determined according to at least one of the following:
determining that uplink data transmitted for the first time to the target cell has been successfully received;
applying a transmission configuration indication (TCI) state different from a transmission configuration indication (TCI) state indicated by the first indication information;
applying a transmission configuration indication (TCI) state from a transmission configuration indication (TCI) state pool different from a transmission configuration indication (TCI) state pool used for L1/L2 triggered mobility (LTM);
the first configured grant is released; or
the second configured grant is configured.

8. The apparatus according to claim 7, wherein that the uplink data transmitted for the first time to the target cell has been successfully received is determined according to at least one of the following that:
DCI without downlink (DL) assignment is received;
a UE content resolution identity MAC CE is received;
DCI with cyclic redundancy check (CRC) scrambled by a cell radio network temporary identifier (C-RNTI) is received; and
radio link control (RLC) layer acknowledgement (ACK) of the uplink data transmitted to the target cell for the first time is received.

9. The apparatus according to claim 1, wherein the data reception apparatus further comprises:
a determining unit configured to, after the first time point, deem that the first configured grant is released.

10. The apparatus according to claim 5, wherein the first time point and the second time point are identical or different.

11. The apparatus according to claim 5, wherein the data reception apparatus further comprises:
a first configuring unit configured to be configured with the first configured grant and/or the second configured grant.

12. The apparatus according to claim 11, wherein the first configuring unit determines the second configured grant according to the configured first configured grant.

13. The apparatus according to claim 11, wherein the first configuring unit is configured with the first configured grant and/or the second configured grant in a candidate cell configuration; or,
the first configuring unit is configured with the first configured grant and/or the second configured grant out of a candidate cell configuration.

14. The apparatus according to claim 11, wherein the first configuring unit determines an association between the configured grant occasions of the first configured grant and the uplink beams and/or downlink beams according to first configuration information, wherein the first configuration information is comprised in a configuration of the first configured grant.

15. The apparatus according to claim 3, wherein the association between the configured grant occasion of the first configured grant and the uplink beam and/or thedownlink beam comprises that: the configured grant occasion of the first configured grant is associated with a first reference signal and/or a second reference signal.

16. The apparatus according to claim 15, wherein that the uplink beam associated with the first configured grant occasion is identical to the uplink beam applied on the first configured grant occasion comprises that: the configured grant occasion of the first configured grant is associated with the first reference signal, wherein the associated first reference signal is a reference signal in a joint transmission configuration indication (TCI) state or an uplink transmission configuration indication (TCI) state or a transmission configuration indication (TCI) state applied on the first configured grant occasion, or is quasi-colocated with a reference signal in a joint transmission configuration indication (TCI) state or an uplink transmission configuration indication (TCI) state or a transmission configuration indication (TCI) state applied on the first configured grant occasion; and/or
that the downlink beam associated with the first configured grant occasion is identical to the downlink beam applied on the first configured grant occasion comprises that: the configured grant occasion of the first configured grant is associated with the second reference signal, wherein the associated second reference signal is a reference signal in a joint transmission configuration indication (TCI) state or a downlink transmission configuration indication (TCI) state or a transmission configuration indication (TCI) state applied on the first configured grant occasion, or is quasi-colocated with a reference signal in a joint transmission configuration indication (TCI) state or a downlink transmission configuration indication (TCI) state or a transmission configuration indication (TCI) state applied on the first configured grant occasion.

17. The apparatus according to claim 15, wherein the first reference signal and/or the second reference signal comprise(s) a measurement system synchronization block (SSB), or a channel state information reference signal (CSI-RS), or a tracking reference signal (TRS).

18. The apparatus according to claim 5, wherein the first configured grant is configured grant type 1, and/or, the second configured grant is configured grant type 1 or configured grant type 2.

19. The apparatus according to claim 1, wherein the uplink data transmitted by the first transmitting unit to the target cell comprise an indication of the downlink beam.

20. A data transmission apparatus, configured in a network device, the data transmission apparatus comprising:
a second transmitting unit configured to transmit first indication information to a terminal equipment,
wherein the terminal equipment transmits uplink data to a target cell by using a first configured grant occasion of a first configured grant after receiving the first indication information and before a first time point.
